# EUROPÄISCHE PATENTSCHRIFT

(11) **EP 3 497 733 B1**
(45) Veröffentlichungstag und Bekanntmachung des Hinweises auf die Patenterteilung: **14.02.2024**
(21) Anmeldenummer: 17751065.8
(22) Anmeldetag: 01.08.2017
(51) Int. Cl.: F16B 37/00, F16B 37/06, F16B 5/08, F16B 37/02, H01M 50/204, H01M 50/244, H01M 50/289

(54) **BATTERIEKASTEN MIT VERBINDUNGSELEMENTEN SOWIE VERFAHREN ZU SEINER HERSTELLUNG**
BATTERY BOX WITH CONNECTING ELEMENTS AND METHOD FOR PRODUCING SUCH
BOÎTE DE BATTERIE AVEC DES ÉLÉMENTS DE LIAISON ET SON PROCÉDÉ DE FABRICATION

(30) Priorität: 10.08.2016 DE 102016114856
(43) Veröffentlichungstag der Anmeldung: 19.06.2019
(73) Patentinhaber: Linde + Wiemann SE & Co. KG, 35683 Dillenburg (DE)
(72) Erfinder: SCHMIDT, Werner, 63755 Akzenau (DE); GEORG, Marcel, 35683 Dillenburg (DE); SOLBACH, Michael, 57439 Attendorn (DE)
(74) Vertreter: Müller, Eckhard
(86) Internationale Anmeldenummer: PCT/EP2017/069479
(87) Internationale Veröffentlichungsnummer: WO 2018/029050

(56) Entgegenhaltungen:
- EP-A1- 2 768 045
- WO-A1-2016/175591
- DE-A1-102011 077 330

## Beschreibung

Die Erfindung betrifft einen Batteriekasten nach dem Oberbegriff des Anspruchs 1 sowie ein Herstellungsverfahren zum Herstellen eines Batteriekastens nach dem Oberbegriff des Anspruchs 11.

In Elektrofahrzeugen als elektrische Energiespeicher verwendete Einheiten, nachfolgend als Batterien bezeichnet, sind bei einem modularen Aufbau oftmals in einzelne, separate Zellen, nachfolgend als Batteriezellen bezeichnet, gegliedert. Beispielsweise können derartige Batteriezellen durch wiederaufladbare Sekundärzellen gebildet sein, die man in der Regel als Akkumulator bezeichnet. Die einzelnen Zellen des elektrischen Energiespeichers werden elektrisch miteinander zur sogenannten Batterie mit der vorgesehenen Betriebsspannung und Energiekapazität verschaltet.

Für die Großserienproduktion werden sogenannte Batteriekästen vorgesehen, in welchen die einzelnen Batteriezellen aufgenommen sind. Jede einzelne Batteriezelle wird mit dem Batteriekasten mechanisch verbunden, um ein Verrutschen während des Betriebes zu verhindern. Der Batteriekasten dient einerseits als modulare Baugruppe, die die Serienfertigung eines Fahrzeugs vereinfacht. Andererseits schützt der Batteriekasten die Batteriezellen vor Umwelteinflüssen sowie vor Beschädigung durch mechanische Einwirkungen, wie sie beispielsweise bei einem Unfall auftreten können.

Beispielsweise können die Batteriezellen innerhalb des Batteriekastens mit dem Batteriekasten verschraubt werden. Dazu können Verbindungselemente, die u.a. Schraubknoten, Schraubpunkte, Schraubdome oder Schraubklötze genannt werden, mit einem Bodenblech des Batteriekastens verbunden werden. Die einzelnen Batteriezellen werden dann mit den Verbindungselementen verschraubt. Die Verbindungselemente können zwischen Trennblechen eines Batterieregisters liegen, welches die einzelnen Batteriezellen räumlich voneinander trennt und zur mechanischen Stabilität des Batteriekastens beitragen kann.

Die Verbindungselemente weisen einen Verbindungsabschnitt auf, in dem eine Bohrung für eine mechanische Verbindung, beispielsweise eine Verschraubung vorgesehen ist. Um ausreichend Raum und Stabilität für die mechanische Verbindung, beispielsweise ausreichend Schraubweg, gewährleisten zu können, weist das Verbindungselement zumindest im Bereich des Verbindungsabschnittes eine verhältnismäßig große Höhe im Vergleich zur Blechdicke des Bodenbleches des Batteriekastens auf.

Das Bodenblech des Batteriekastens dient auch zur Abdichtung des Batteriekastens an dessen Unterseite. Das Bodenblech wird in der Regel geschlossen ausgeführt, und die vorgenannten Verbindungselemente werden an die Innenseite des Bodenbleches gefügt.

Dazu ist es denkbar, die Verbindungselemente im Bereich ihrer Verbindungsabschnitte unter Verwendung eines Zusatzmaterials und mittels einer Kehlnaht mit dem Bodenblech des Batteriekastens zu verschweißen. Neben einem nachteilig hohen Fertigungsaufwand hat sich gezeigt, dass sich das Bodenblech aufgrund des Wärmeeintrags beim Schweißen verziehen und lokal unzulässig weit aufgeschmolzen werden kann. Der im Vergleich zum Bodenblech relativ massiv ausgebildete Verbindungsabschnitt erfordert nämlich einen verhältnismäßig hohen Wärmeeintrag zum Aufschmelzen, welcher gleichzeitig zu einem vorzeitigen Aufschmelzen des Bodenbleches und damit zu den vorgenannten Nachteilen führen kann.

Aus der EP 2 768 045 A1 ist eine Batterieeinrichtung für ein Fahrzeug beschrieben, welches ein Batteriemodul aufweist, das aus einer Vielzahl von Batteriezellen zusammengesetzt ist. Das Batteriemodul wird auf der Oberseite eines Trägers des Batteriegehäuses angeordnet. Ein Deckel ist zum Abdecken des Batteriemoduls vorgesehen.

Aus der DE 10 2015 111 749 A1 ist eine Batterieeinrichtung für ein elektrisch betriebenes Fahrzeug und ein Verfahren zur Herstellung einer solchen Batterieeinrichtung bekannt. Die Batterieeinrichtung umfasst eine Mehrzahl von Batteriemodulen mit Batteriezellen. Eine Aufnahmeeinrichtung zur Aufnahme der Batteriemodule umfasst eine unterhalb der Batteriemodule angeordnete Schottwand und eine unterhalb der Schottwand angeordnete Bodenplatte.

Aus der DE 10 2011 077330 A1 ist eine Batterie mit wenigstens einem, mehrere nebeneinander angeordnete Batteriezellen umfassenden Batteriemodul bekannt. Das Batteriemodul ist mittels wenigstens eines, einen Hinterschnitt aufweisenden Halteelements auf einer Grundplatte der Batterie oder einer Grundplatte einer Untereinheit der Batterie angeordnet.

Aus der WO 2016/175591 A1 und der EP 3 291 330 A1 ist ein Batteriepack bekannt mit einer Mehrzahl von sekundären Zellen, welche in einer vertikalen Richtung angeordnet sind. Eine Mehrzahl von Einsätzen mit Kopplungslöchern nehmen die sekundären Zellen auf, indem die Zellen in der vertikalen Richtung gestapelt werden. Eine untere Endplatte ist an einem unteren Abschnitt eines Stapels der sekundären Zellen und der Einsätze platziert. Ein erstes Befestigungselement weist einen Einsetzabschnitt und einen Schweißabschnitt auf, welcher an der unteren Endplatte befestigt ist. Ein längliches zweites Befestigungselement ist an der unteren Endplatte in einer Richtung rechtwinklig zu der unteren Endplatte angeordnet. Ein unterer Endabschnitt des zweiten Befestigungselements ist mit dem ersten Befestigungselement verschraubt. Die Batteriezellen werden mit den Kopplungslöchern auf die zweiten Befestigungselemente aufgestapelt.

Ausgehend von den zuvor beschriebenen Nachteilen liegt der Erfindung die Aufgabe zugrunde, auf den Einsatz von Zusatzmaterial während des Fügens zumindest weitgehend verzichten zu können und die Fügeverbindung zwischen dem Bodenblech des Batteriekastens qualitativ besser und wirtschaftlicher zu gestalten.

Diese Aufgabe wird gelöst mit einem Batteriekasten für ein Elektrofahrzeug mit einem Bodenblech und mit einem daran angefügten Verbindungselement nach Anspruch 1.

Das Verbindungselement des erfindungsgemäßen Batteriekastens weist zusätzlich zu dem Verbindungsabschnitt einen Fügeabschnitt zum festen Verbinden mit dem Batteriekasten auf. Auf diese Weise kann das Verbindungselement einerseits für den Aufbau einer mechanischen Verbindung mit der Batteriezelle optimiert und andererseits für das feste Verbinden mit dem Batteriekasten an dem Fügeabschnitt ausgelegt werden, um hier unterschiedlichen Anforderungen gerecht zu werden.

Der Erfindung liegt der Gedanke zugrunde, dass bspw. zum Aufbau einer Schraubverbindung ein relativ massiver Verbindungsabschnitt erforderlich ist, welcher die Kräfte aus einer Schraubverbindung aufnehmen kann und außerdem einen gewissen Schraubweg für einen Schraubbolzen bereitstellen soll. Ein auf das Fügeverfahren ausgelegter Fügeabschnitt ist zum festen Verbinden mit dem Batteriekasten vorgesehen. Mit Fügeverfahren sind vor allem Verfahren gemeint, die einen Wärmeeintrag in die zu fügenden Bauteile bewirken, wie bspw. Schweißen. Durch das Vorsehen des Fügeabschnittes kann bspw. die Wärmekapazität des Fügeabschnittes lokal an die Wärmekapazität des zu fügenden Abschnittes des Bodenbleches angepasst werden, wodurch eine unzulässige Erwärmung beider Bauteile an der zu fügenden Stelle vermieden oder zumindest herabgesetzt werden kann.

Erfindungsgemäß ist das Verbindungselement im Bereich des Fügeabschnittes durch Schweißen, insbesondere durch Laserschweißen, an das Bodenblech gefügt. Das Fügen des Verbindungselementes im Bereich des Fügeabschnittes durch Schweißen ermöglicht eine besonders wirtschaftliche, schnelle und zuverlässige Verbindung des Verbindungselementes mit dem Bodenblech. Die Anwendung eines Schweißverfahrens zum Fügen des Fügeabschnittes an das Bodenblech ermöglicht eine besonders wirtschaftliche und schnelle Fertigung. Insbesondere hat sich Laserschweißen als vorteilhaft erwiesen, da hierbei ein mechanischer Kontakt zwischen einer Schweißelektrode und den Bauteilen nicht erforderlich ist, und so der Aufwand für Einspannungen und entsprechende Vorrichtungen niedrig gehalten werden kann.

In einer vorteilhaften Ausführungsform kann vorgesehen sein, dass der Fügeabschnitt an den Verbindungsabschnitt angrenzend ausgebildet ist. Auf diese Weise lässt sich das Verbindungselement besonders kompakt und dennoch mechanisch stabil gestalten. Außerdem vereinfacht dies die Herstellbarkeit des Verbindungselementes.

In weiteren vorteilhaften Ausführungsform kann vorgesehen sein, dass der Fügeabschnitt als blechartige, an der Außenkontur des Verbindungselementes wenigstens abschnittsweise verlaufende Lamelle ausgebildet ist. Die Lamelle kann in Art einer Schwimmhaut ausgeführt sein. Durch die Ausbildung des Fügeabschnitts als blechartige Lamelle werden ähnliche mechanische Verhältnisse zwischen dem Bodenblech und dem Fügeabschnitt geschaffen, wodurch das Fügeverfahren deutlich vereinfacht wird. Eine an der Außenkontur des Verbindungselementes verlaufende Lamelle trägt zudem zu einer kompakten Ausgestaltung sowie zur Vereinfachung des Fügens bei, da der Fügeabschnitt gut zugänglich ist. Wenn die blechartige Lamelle nur abschnittsweise an der Außenkontur vorgesehen wird, lässt sich das für den Fügeabschnitt erforderliche Material auf ein Minimum begrenzen, da im Fahrzeugbau grundsätzlich auf den Einsatz von nicht erforderlichem und somit teurem sowie schwerem Material verzichtet werden kann. Ist die blechartige Lamelle derart ausgeführt, dass sie an der gesamten Außenkontur des Verbindungselementes ausgebildet ist, ermöglicht dies einen universellen Einsatz des Verbindungselementes in unterschiedlich gestalteten Batteriekästen. Zudem ist die Herstellbarkeit vereinfacht.

In einer bevorzugten Ausführungsform kann der Verbindungsabschnitt eine Dicke von 0,75 mm bis 1,75 mm, vorzugsweise 1 mm bis 1,5 mm, insbesondere 1,5 mm aufweisen. Innerhalb dieser Bereiche hat sich eine besonders gute Anpassung an die Dicke des üblicherweise verwendeten Bodenbleches herausgestellt, welches wiederum eine Blechdicke von etwa 0,5 mm bis 1,5 mm, vorzugsweise 0,5 mm bis 1 mm aufweisen kann. Insgesamt kann der Verbindungsabschnitt grundsätzlich derart ausgelegt werden, dass die Dicke des Fügeabschnitts ein Verhältnis von etwa 1:1 bis etwa 1:3 im Verhältnis zur Blechdicke des Bodenbleches aufweist.

Vorzugsweise kann vorgesehen sein, dass der Fügeabschnitt einstückig mit dem Verbindungsabschnitt ausgebildet ist. Dies erleichtert die Herstellung des Verbindungselementes und verbessert dessen mechanische Stabilität.

Vorzugsweise kann vorgesehen sein, dass das Verbindungselement als Feingußbauteil, Kaltfliespressbauteil oder als Blechbauteil ausgebildet ist. Diese Herstellverfahren haben sich als besonders vorteilhaft und wirtschaftlich für die Massenproduktion herausgestellt. Zudem lässt sich der Fügeabschnitt besonders einfach an das Verbindungselement in einem Arbeitsgang anformen.

Zudem kann vorgesehen sein, während des einen Herstellungsvorgangs gleichzeitig auch weitere Eigenschaften des Verbindungselementes auszubilden, wie bspw. ein Innengewinde in einer Bohrung des Verbindungsabschnittes.

Vorteilhafterweise kann das Verbindungselement aus einem schweißbaren Metall oder einer schweißbaren Legierung, insbesondere aus Stahl oder einer Aluminiumlegierung bestehen. Diese Materialien lassen sich sowohl gut in bevorzugten Umform- oder Urformvefahren zur Herstellung des Verbindungselementes verarbeiten, als auch während des Fügens an das Bodenblech. Zudem weisen insbesondere Stahl und Aluminium hohe mechanische Festigkeiten zum Aufbau mechanischer Verbindungen auf.

Erfindungsgemäß weist der Batteriekasten wenigstens ein Trennblech zum Separieren einer ersten Batteriezelle von einer zweiten Batteriezelle auf. Ein Trennblech kann einerseits die mechanische Stabilität des Batteriekastens erhöhen. Zusätzlich oder alternativ dient es zur räumlichen Trennung der einzelnen Batteriezellen, wodurch bspw. die Batteriezellen im Fehlerfall von negativen Einflüssen benachbarter Batteriezellen geschützt werden.

Erfindungsgemäß weist das wenigstens eine Trennblech wenigstens einen Fügeflansch auf, der in gleicher Weise wie das Verbindungselement mit dem Bodenblech verbunden ist. Dies ermöglicht die Anwendung desselben Fügeverfahrens sowohl für das Verbindungselement als auch für das Trennblech, wodurch die Herstellung des Batteriekastens insgesamt einfacher und günstiger durchgeführt werden kann. Ferner lässt sich der Batteriekasten durch das Einbringen des Verbindungselementes sowie der Trennbleche maßhaltiger fertigen, da zunächst das wenigstens eine Trennblech und das wenigstens eine Verbindungselement zueinander und im Verhältnis zu dem Bodenblech sowie gegebenenfalls zu den übrigen Bauteilen bereits zentriert und ausgerichtet werden können, bevor ein finales Fügen der Bauteile an das Bodenblech stattfindet.

Besonders bevorzugt kann vorgesehen sein, dass die Blechdicke des Bodenbleches und die Dicke des wenigstens einen Fügeabschnittes ein Verhältnis von etwa 1:1 bis 1:3 aufweisen. Innerhalb dieses Bereiches sind besonders geringe Verformungen des Bodenbleches zu erwarten.

Bevorzugt weist das Bodenblech eine Dicke zwischen 0,5 mm und 1 mm auf. Innerhalb dieses Bereiches wird die mechanische Festigkeit des Bodenbleches gegenüber dem Gewicht des Bodenbleches optimal ausgenutzt.

Die Aufgabe wird ferner durch ein Verfahren zum Herstellen eines Batteriekastens für ein Elektrofahrzeug nach Anspruch 11 gelöst. Danach werden die Verbindungselemente zunächst auf dem Bodenblech angeordnet und dann mit diesem verschweißt. Insbesondere kann dies durch Laserschweißen erfolgen. Dabei werden Verbindungselemente zum Herstellen eines erfindungsgemäßen Batteriekastens verwendet.

Erfindungsgemäß wird zwischen dem Anordnen der Verbindungselemente auf dem Bodenblech und dem Verschweißen mit dem Bodenblech wenigstens ein Trennblech auf dem Bodenblech angeordnet, wobei Trennblech und Verbindungselemente dann sukzessive und in gleicher Weise mit dem Bodenblech verschweißt werden. Dies erlaubt zumindest das Bodenblech, das wenigstens eine Trennblech sowie die Verbindungselemente räumlich zueinander anzuordnen und auszurichten, bevor diese Bauteile in eine Fügeeinrichtung überführt und dort in praktisch einem Arbeitsgang gefügt werden.

### Darstellung der Erfindung

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

### Dabei zeigen zum Teil schematisch:

- Figur 1: ein Kreuzverbindungselement gemäß der Erfindung in perspektivischer Ansicht,
- Figur 2: ein Seitenverbindungselement gemäß der Erfindung in perspektivischer Ansicht,
- Figur 3: ein Eckverbindungselement gemäß der Erfindung in perspektivischer Ansicht,
- Figur 4: eine Seitenansicht eines Verbindungselementes in Form eines Seitenverbindungselementes oder eines Kreuzverbindungselementes,
- Figur 5: eine alternative Ausführungsform eines Kreuzverbindungselementes in perspektivischer Ansicht,
- Figur 6: eine alternative Ausführungsform eines Seitenverbindungselementes in perspektivischer Ansicht,
- Figur 7: eine perspektivische Ansicht eines Teils eines erfindungsgemäßen Batteriekastens mit Verbindungselementen,
- Figur 8: ein Detailausschnitt eines erfindungsgemäßen Batteriekastens mit einem Verbindungselement in perspektivischer Ansicht,
- Figur 9: eine weitere perspektivische Detailansicht eines erfindungsgemäßen Batteriekastens mit Verbindungselement und
- Figur 10: eine Vergrößerung eines Teils der Ansicht aus der Figur 9,
- Figur 11: ein Ausschnitt aus einer Draufsicht auf den erfindungsgemäßen Batteriekasten mit schematischer Darstellung einer Batteriezelle sowie eines Elektrofahrzeugs.

Gleiche oder gleichwirkende Bauteile werden in den nachfolgend dargestellten Figuren der Zeichnungen anhand mehrerer Ausführungsformen mit gleichen Bezugszeichen versehen, um die Lesbarkeit zu verbessern.

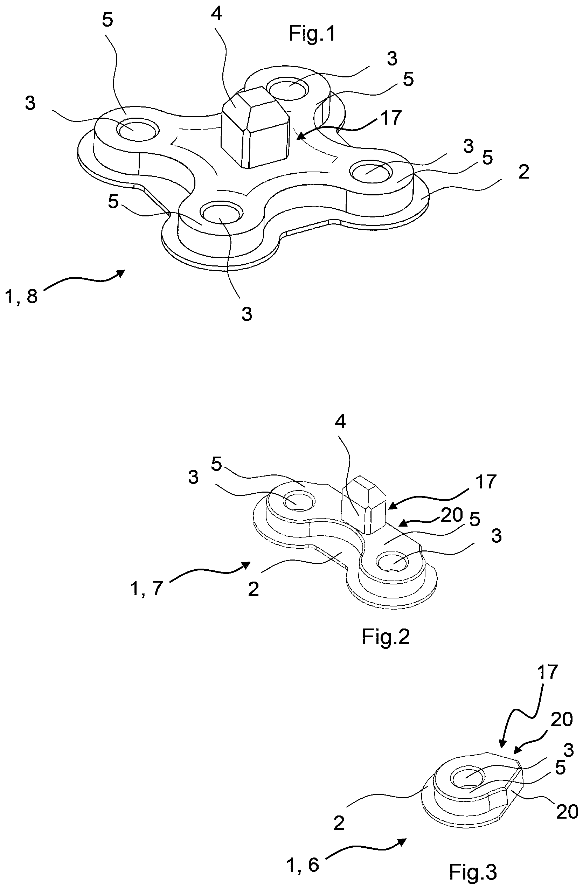

Figur 1 zeigt ein Verbindungselement 1 mit einem Fügeabschnitt 2, der sich in Form einer Lamelle umlaufend an einem Verbindungsabschnitt 5 des Verbindungselementes 1 erstreckt.

Das vorliegende, beispielhafte Verbindungselement 1 weist insgesamt vier Verbindungsabschnitte 5 auf, die sich kreuzweise bezogen auf einen Zentralabschnitt 17 des Verbindungselementes 1 gegenüberliegen. Im Zentralabschnitt 17 des Verbindungselementes 1 ist eine Zentriernocke 4 vorgesehen, an welcher andere Bauteile ausgerichtet werden können.

Jeder Verbindungsabschnitt 5 weist eine Bohrung auf, die im vorliegenden Fall als Durchgangsbohrung 3 ausgeführt ist. Diese Bohrung kann bei allen Ausführungsformen ein nicht dargestelltes Innengewinde aufweisen, welches zur Verschraubung mit einer in der Figur 15 schematisch angedeuteten Batteriezelle 15 dient. Hierbei kann das Innengewinde bereits bei der Herstellung des Verbindungselementes 1 an dem Verbindungselement vorgesehen werden. Es ist jedoch auch möglich, lediglich die Durchgangsbohrung 3 an dem Verbindungselement 1 vorzusehen, in welche dann eine selbstschneidende Schraube oder ein selbstschneidender Bolzen im Zuge der Montage der Batteriezelle 15 eingeschraubt wird, wobei dann ein Innengewinde an der Bohrung entsteht.

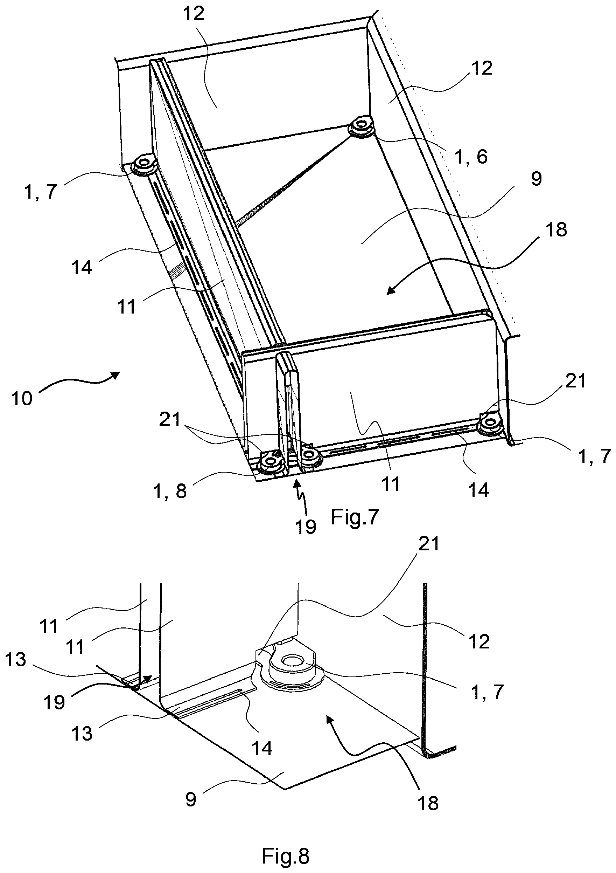

Figur 2 zeigt ein Verbindungselement 1, welches sich von der Darstellung in der Figur 1 dadurch unterscheidet, dass es sich um ein Seitenverbindungselement 7 mit lediglich zwei Verbindungsabschnitten 5 handelt. Auch hier ist in dem Zentralabschnitt 17 eine Zentriernocke 4 vorgesehen. Diese grenzt an eine ebene Seitenfläche 20, welche im eingebauten Zustand an einem Seitenblech 12 eines Batteriekastens 10 anliegt oder dem Seitenblech 12 gegenüberliegt. Dies ist beispielsweise in den Figuren 7 und 8 dargestellt.

Die Figur 3 zeigt ein Verbindungselement 1, welches vorliegend als ein Eckverbindungselement 6 ausgeführt ist. Das Eckverbindungselement 6 weist zwei ebene Seitenflächen 20 auf, welche im eingebauten Zustand innerhalb des Batteriekastens 10 an Seitenbleche 12 des Batteriekastens 10 angrenzen oder den Seitenblechen 12 gegenüberliegen. Dies ist in der Figur 7 dargestellt.

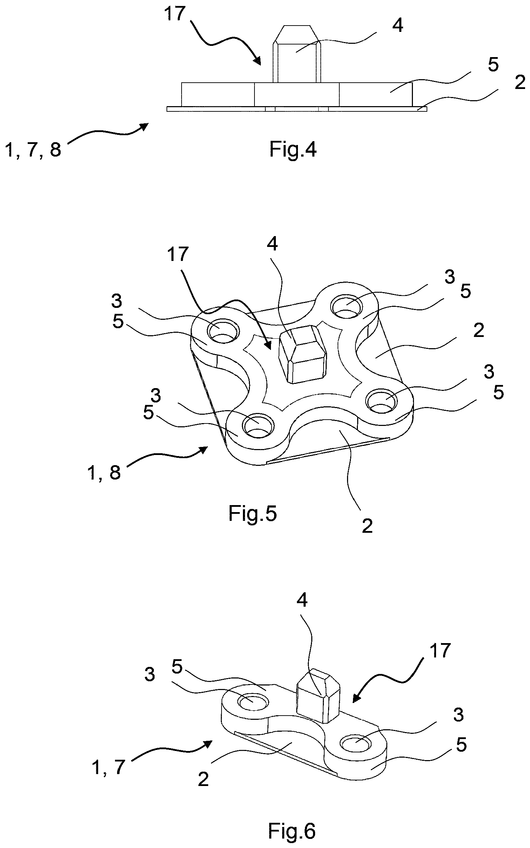

Die Figur 4 zeigt eine Seitenansicht eines Verbindungselementes 1 als Seitenverbindungselement 7 oder als Kreuzverbindungselement 8, aus welcher ersichtlich wird, dass die als seitliche Lamelle umlaufende "Schwimmhaut", die den Fügeabschnitt 2 bildet, eine deutlich geringere Dicke aufweist, als der jeweilige Fügeabschnitt 5.

In der Figur 5 ist eine alternative Ausführungsform für ein Kreuzverbindungselement 8 dargestellt, bei welchem der Fügeabschnitt 2 nur abschnittsweise an der äußeren Kontur des Verbindungselementes 1 ausgebildet ist, nämlich zwischen den sich kreuzweise gegenüber liegenden Schenkeln der Verbindungsabschnitte 5. Diese Bauform ist besonders kompakt und erlaubt eine Verschweißung des Verbindungselementes 1 mit einem darunterliegenden Bodenblech 9 des Batteriekastens 10 gezielt innerhalb der durch die Verbindungsabschnitte 5 definierten Außenkontur des Verbindungselementes 1.

In der Figur 6 ist eine alternative Ausführungsform eines Seitenverbindungselementes dargestellt, die gegenüber dem in der Figur 2 dargestellten Seitenverbindungselement 7 lediglich eine blechartige Lamelle des Fügeabschnitts 2 zwischen den beiden Schenkeln der Verbindungsabschnitte 5 aufweist. Damit folgt die in der Figur 6 dargestellte Ausführungsform demselben Prinzip wie die Ausführungsform der Figur 5.

Die Figur 7 zeigt eine perspektivische Teilansicht des bereits teilmontierten Batteriekastens 10, der seitlich durch Seitenbleche 12 begrenzt ist, welche an dem Bodenblech 9 anliegen.

Das in der Darstellung der Figur 7 in der oberen rechten Ecke dargestellte Verbindungselement 1 ist ein Eckverbindungselement 6, welches mit seinen Seitenflächen 20 an die Seitenbleche 12 angrenzt. Das in der oberen linken Ecke und in der unteren rechten Ecke dargestellte Verbindungselement ist jeweils ein Seitenverbindungselement 7, welches mit dessen ebener Seitenfläche 20 an das jeweilige Seitenblech 12 des Batteriekastens 10 angrenzt. Der Zentralabschnitt 17 mit der Zentriernocke 4 ist bei den Seitenverbindungselementen 7 jeweils durch ein Trennblech 11 verdeckt. Die Trennbleche 11 sowie die Seitenbleche 12 definieren in der Figur 7 ein Zellenfach 18, in welches eine Batteriezelle 15 eingelegt und mit den Verbindungsabschnitten 5 der Verbindungselemente 1 verschraubt werden kann.

Hierbei definieren die Trennbleche 11 einen Separationsbereich 19, welcher jeweils den Zwischenraum zwischen zwei in den Batteriekasten 10 eingebaute Batteriezellen 15 bildet.

Die Seitenbleche sind zur Verbesserung der mechanischen Stabilität C-förmig umgebogen und an das Bodenblech 9 gefügt.

Die Trennbleche 11 sind in der vorliegenden Ausführungsform als nach unten geöffnete O-förmige Bleche ausgeführt, welche am Ende der Schenkel nach außen zu einem Fügeflansch 13 umgebogen sind. Der Fügeflansch 13 liegt mit seinen Schenkeln auf dem Bodenblech 9 des Batteriekastens 10 auf. Im Bereich der Verbindungselemente 1 ist jeweils eine Aussparung 21 vorgesehen, welche den Zentralabschnitt 17 des jeweiligen Verbindungselementes 1 aufnimmt.

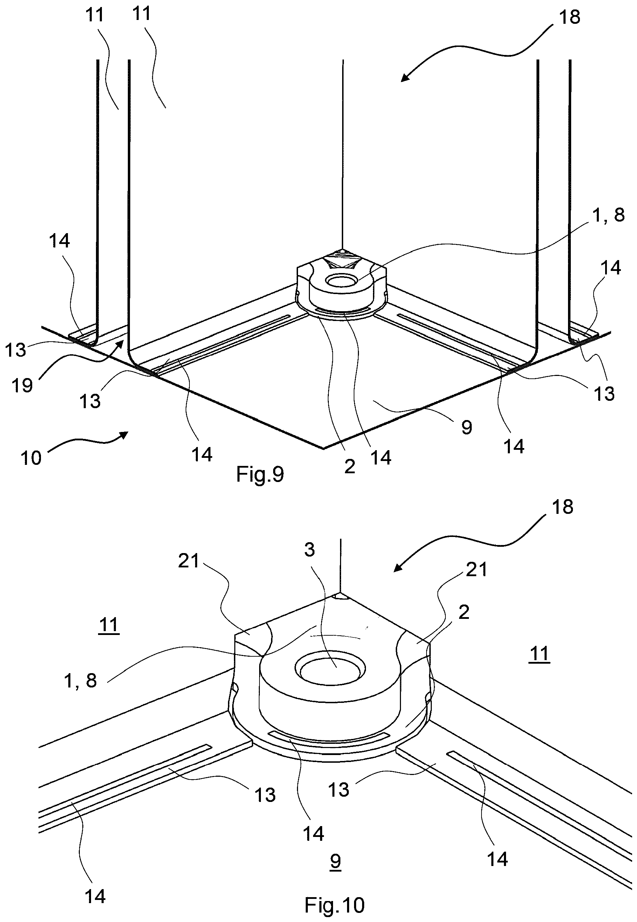

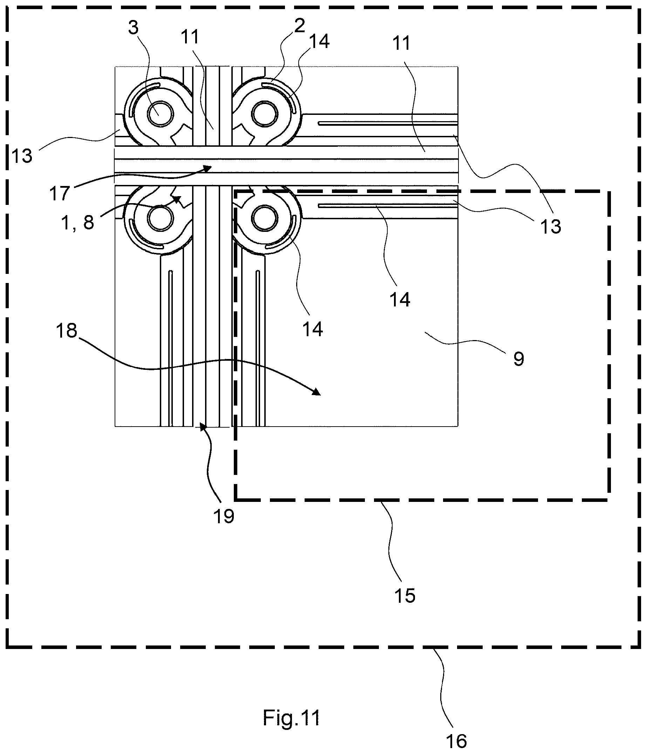

Sowohl die Trennbleche 11 als auch die Verbindungselemente 1 sind im Bereich der Flansche 13 bzw. im Bereich der Fügeabschnitte 2 mit dem Bodenblech 9 unter Bildung von Schweißnähten 14 verschweißt. Die Schweißnähte 14 sind in den Figuren 7, 8, 9, 10 und 11 dargestellt, welche sich linienförmig über den jeweiligen Verbindungsabschnitt 2 bzw. über den Flansch 13 erstrecken. Die Schweißung wird im vorliegenden Ausführungsbeispiel durch Laserschweißen durchgeführt, wobei der Strahl des Schweißlasers auf die Oberfläche des jeweiligen Fügeabschnittes 2 oder Flansches 13 gerichtet und auf die Grenzfläche von Fügeabschnitte 2 und Bodenblech 9 oder Flansch 13 und Bodenblech 9 fokussiert ist.

Bei der in den Figuren 7 bis 11 dargestellten Ausführungsform des Batteriekastens 10 werden Verbindungselemente gemäß der Figuren 1 bis 4 verwendet, welche durch den abschnittsweise am Außenradius des jeweiligen Verbindungabschnitts 5 verlaufenden Fügeabschnitt 2 in einem vereinfachten Herstellungsverfahren in den Batteriekasten 10 eingefügt werden können.

Bei diesen vereinfachten Herstellungsverfahren wird zunächst das wenigstens eine Eckverbindungselement 6, das wenigstens eine Seitenverbindungselement 7 und das wenigstens eine Kreuzverbindungselement 8 auf das Bodenblech 9 aufgelegt. Dann wird das zumindest eine Trennblech 11 auf das Bodenblech 9 aufgelegt und mit dem Bodenblech 9 sowie zu dem jeweiligen Verbindungselement 1 ausgerichtet. Erst dann erfolgt eine Verschweißung der Fügeabschnitte mit dem Bodenblech 9 sowie der Flansche 13 mit dem Bodenblech 9. Dadurch, dass die Verbindungsabschnitte 2 bei den vorliegenden Verbindungselementen 1 sich entlang des Außenradius des jeweiligen Verbindungabschnittes 5 erstrecken, ragen die Verbindungsabschnitte 2 in das durch die Seitenwände 12 und die Trennwände 11 definierte Zellenfach 18 hinein, so dass die Verbindungsabschnitte 2 für einen sukzessiven Laserschweißvorgang zugänglich sind, bei welchem die Schweißnähte 14 an dem Flansch 13 sowie die Schweißnähte 14 an den Verbindungsabschnitten 2 in einem Arbeitsgang aufgebaut werden können.

Die alternativen Verbindungselemente 1 gemäß der Figuren 5 und 6 müssen im Gegensatz dazu zunächst auf das Bodenblech 9 aufgelegt und dann mit dem Bodenblech 9 verschweißt werden, bevor die Trennbleche 11 in den Batteriekasten 10 eingelegt werden können, da die Trennbleche 11 die Fügeabschnitte 2 der Verbindungselemente 1 gemäß der Figuren 5 und 6 wenigstens teilweise verdecken. Diese Ausführungsform ist jedoch etwas raumsparender, da kein über den Verbindungsabschnitt 5 hinausragender Teil des Verbindungselementes 1 das Zellenfach 18 verkleinert.

In das fertiggestellte Zellenfach 18 kann nun eine Batteriezelle 15 eingesetzt und mit dem Batteriekasten 10 verschraubt werden.

Ein vollständig montierter Batteriekasten 10 wird dann als Baugruppe in ein Elektrofahrzeug 16 eingebaut. Grundsätzlich kann der Batteriekasten 10 zur Wartung oder zum Austausch aus dem Elektrofahrzeug wieder entnommen werden. Die im Batteriekasten 10 aufgenommenen Batteriezellen 15 können ihrerseits aus dem Batteriekasten 10 wieder entnommen werden. Dazu ist die Verbindung zwischen Batteriezelle 15 und Verbindungsabschnitt 5 jeweils lösbar ausgebildet. In diesem Sinne bilden die vorstehend beschriebenen Verbindungselemente 1 Batteriezellenverbindungselemente.

### Bezugszeichenliste

- 1: Verbindungselement / Batteriezellenverbindungselement (=Schraubdom, Schraubklotz, Schraubknoten, Schraubpunkt)
- 2: Fügeabschnitt (= Schwimmhaut)
- 3: Durchgangsbohrung
- 4: Zentriernocke
- 5: Verbindungsabschnitt (=Schraubverbindungsabschnitt)
- 6: Eckverbindungselement
- 7: Seitenverbindungselement
- 8: Kreuzverbindungselement
- 9: Bodenblech
- 10: Batteriekasten
- 11: Trennblech
- 12: Seitenblech
- 13: Fügeflansch
- 14: Schweißnaht
- 15: Batteriezelle
- 16: Elektrofahrzeug
- 17: Zentralabschnitt
- 18: Zellenfach
- 19: Separationsbereich
- 20: Seitenfläche
- 21: Aussparung

## Patentansprüche

1. Batteriekasten (10) mit mehreren Batteriezellen (15) für ein Elektrofahrzeug (16), mit einem Bodenblech (9) und mehreren daran angefügten Verbindungselementen (1) zum Verbinden der Batteriezellen (15) mit dem Batteriekasten (10), wobei die Verbindungselemente (1) einerseits zum Verbinden mit einer Batteriezelle (15) wenigstens einen Verbindungsabschnitt (5) mit einer Bohrung für eine mechanische Verbindung der Verbindungselemente (1) mit der Batteriezelle (15) durch Verschraubung aufweisen und andererseits an den Batteriekasten (10) gefügt sind, wobei die Verbindungselemente (1) wenigstens einen als blechartige Lamelle ausgebildeten Fügeabschnitt (2) zum festen Verbinden mit dem Batteriekasten (10) aufweisen und die Verbindungselemente (1) im Bereich des Fügeabschnittes (2) an das Bodenblech (9) durch Schweißen gefügt sind, wobei wenigstens ein Trennblech (11) zum Separieren einer ersten Batteriezelle (15) von einer zweiten Batteriezelle (15) vorgesehen ist und das wenigstens eine Trennblech (11) wenigstens einen Fügeflansch (13) aufweist, der durch Schweißen mit dem Bodenblech (9) gefügt ist.

2. Batteriekasten (10) nach Anspruch 1, **dadurch gekennzeichnet, dass** der Fügeabschnitt (2) an den Verbindungsabschnitt (5) angrenzend ausgebildet ist.

3. Batteriekasten (10) nach einem der vorhergehenden Ansprüche, **dadurch gekennzeichnet, dass** der Fügeabschnitt (2) als blechartige, an der Außenkontur des Verbindungselementes (1) wenigstens abschnittsweise verlaufende Lamelle ausgebildet ist.

4. Batteriekasten (10) nach einem der vorhergehenden Ansprüche, **dadurch gekennzeichnet, dass** der Verbindungsabschnitt (5) eine Dicke von 0,75 mm bis 1,75 mm, vorzugsweise 1 mm bis 1,5 mm, insbesondere 1,5 mm aufweist.

5. Batteriekasten (10) nach einem der vorhergehenden Ansprüche, **dadurch gekennzeichnet, dass** der Fügeabschnitt (2) einstückig mit dem Verbindungsabschnitt (5) ausgebildet ist.

6. Batteriekasten (10) nach einem der vorhergehenden Ansprüche, **dadurch gekennzeichnet, dass** das Verbindungselement (1) als Feingussbauteil, als Kaltfließpressbauteil oder als Blechbauteil ausgebildet ist.

7. Batteriekasten (10) nach einem der vorhergehenden Ansprüche, **dadurch gekennzeichnet, dass** das Verbindungselement (1) aus einem schweißbaren Metall oder einer schweißbaren Legierung, insbesondere aus Stahl oder einer Aluminiumlegierung besteht.

8. Batteriekasten (10) nach einem der vorhergehenden Ansprüche 1 bis 7, **dadurch gekennzeichnet, dass** das Verbindungselement (1) im Bereich des Fügeabschnittes (2) an das Bodenblech (9) durch Laserschweißen gefügt ist.

9. Batteriekasten nach einem der vorhergehenden Ansprüche 1 bis 8 **dadurch gekennzeichnet, dass** die Blechdicke des Bodenbleches (9) und die Dicke des wenigstens einen Fügeabschnittes (2) ein Verhältnis von 1:1 bis 1:3 aufweisen.

10. Batteriekasten nach einem der vorhergehenden Ansprüche 1 bis 9, **dadurch gekennzeichnet, dass** das Bodenblech (9) eine Dicke zwischen 0,5 mm und 1 mm aufweist.

11. Verfahren zum Herstellen eines Batteriekastens (10) für ein Elektrofahrzeug (16) nach einem der vorhergehenden Ansprüche 1 bis 10, wobei die Verbindungselemente (1), auf einem Bodenblech (9) angeordnet und mit diesem verschweißt werden, **dadurch gekennzeichnet, dass** zwischen dem Anordnen der Verbindungselemente (1) auf dem Bodenblech (9) und dem Verschweißen mit dem Bodenblech (9) wenigstens ein Trennblech (11) auf dem Bodenblech (9) angeordnet wird, wobei Trennblech (11) und Verbindungselemente (1) dann sukzessive und in gleicher Weise mit dem Bodenblech verschweißt werden.

## Claims

1. Battery box (10) with multiple battery cells (15) for an electric vehicle (16), with a base sheet (9) and with multiple connecting elements (1) attached thereto for connecting the battery cells (15) to the battery box (10), wherein the connecting elements (1) have, for connection to a battery cell (15), at least one connecting portion (5) with a bore for mechanical connection of the connecting elements (1) to the battery cell (15) by way of screw connection, on the one hand, and are joined to the battery box (10), on the other hand, wherein the connecting elements (1) have at least one joining portion (2), in the form of a sheet-like lamella, for fixed connection to the battery box (10) and the connecting elements (1) are joined to the base sheet (9) by way of welding in the region of the joining portion (2), wherein provision is made of at least one separating sheet (11) for separating a first battery cell (15) from a second battery cell (15) and the at least one separating sheet (11) has at least one joining flange (13) which is joined to the base sheet (9) by way of welding.

2. Battery box (10) according to Claim 1, **characterized in that** the joining portion (2) is formed so as to adjoin the connecting portion (5).

3. Battery box (10) according to either of the preceding claims, **characterized in that** the joining portion (2) is in the form of a sheet-like lamella which at least sectionally extends on the outer contour of the connecting element (1).

4. Battery box (10) according to one of the preceding claims, **characterized in that** the connecting portion (5) has a thickness of 0.75 mm to 1.75 mm, preferably 1 mm to 1.5 mm, in particular 1.5 mm.

5. Battery box (10) according to one of the preceding claims, **characterized in that** the joining portion (2) is formed in one piece with the connecting portion (5).

6. Battery box (10) according to one of the preceding claims, **characterized in that** the connecting element (1) is in the form of a precision-cast component, cold-extruded component or sheet component.

7. Battery box (10) according to one of the preceding claims, **characterized in that** the connecting element (1) consists of a weldable metal or a weldable alloy, in particular of steel or an aluminium alloy.

8. Battery box (10) according to one of preceding Claims 1 to 7, **characterized in that** the connecting element (1) is joined to the base sheet (9) by way of laser welding in the region of the joining portion (2).

9. Battery box according to one of preceding Claims 1 to 8, **characterized in that** the sheet thickness of the base sheet (9) and thickness of the at least one joining portion (2) are in a ratio of 1:1 to 1:3.

10. Battery box according to one of preceding Claims 1 to 9, **characterized in that** the base sheet (9) has a thickness of between 0.5 mm and 1 mm.

11. Method for producing a battery box (10) for an electric vehicle (16) according to one of preceding Claims 1 to 10, wherein the connecting elements (1) are arranged on a base sheet (9) and are welded thereto, **characterized in that**, between the arrangement of the connecting elements (1) on the base sheet (9) and the welding to the base sheet (9), at least one separating sheet (11) is arranged on the base sheet (9), wherein separating sheet (11) and connecting elements (1) are then welded in succession and in the same manner to the base sheet.

## Revendications

1. Boîte de batterie (10) comportant plusieurs cellules de batterie (15) pour un véhicule électrique (16), comportant une tôle de fond (9) et plusieurs éléments de liaison (1), joints à celle-ci, servant à la liaison des cellules de batterie (15) à la boîte de batterie (10), les éléments de liaison (1), d'une part, pour la liaison à une cellule de batterie (15), présentant au moins une section de liaison (5) comportant un alésage pour une liaison mécanique des éléments de liaison (1) à la cellule de batterie (15) par vissage et, d'autre part, étant joints à la boîte de batterie (10), les éléments de liaison (1) présentant au moins une section de jonction (2), réalisée sous forme de lamelle de type tôle, servant à la liaison fixe à la boîte de batterie (10) et les éléments de liaison (1) étant joints à la tôle de fond (9) par soudure dans la région de la section de jonction (2), au moins une tôle de séparation (11) servant à la séparation d'une première cellule de batterie (15) d'une deuxième cellule de batterie (15) étant prévue et l'au moins une tôle de séparation (11) présentant au moins une bride de jonction (13) qui est jointe à la tôle de fond (9) par soudage.

2. Boîte de batterie (10) selon la revendication 1, **caractérisée en ce que** la section de jonction (2) est réalisée de manière adjacente à la section de liaison (5).

3. Boîte de batterie (10) selon l'une des revendications précédentes, **caractérisée en ce que** la section de jonction (2) est réalisée sous forme de lamelle de type tôle, s'étendant au moins dans certaines sections au niveau du contour extérieur de l'élément de liaison (1).

4. Boîte de batterie (10) selon l'une des revendications précédentes, **caractérisée en ce que** la section de liaison (5) présente une épaisseur de 0,75 mm à 1,75 mm, de préférence de 1 mm à 1,5 mm, en particulier de 1,5 mm.

5. Boîte de batterie (10) selon l'une des revendications précédentes, **caractérisée en ce que** la section de jonction (2) est réalisée d'un seul tenant avec la section de liaison (5).

6. Boîte de batterie (10) selon l'une des revendications précédentes, **caractérisée en ce que** l'élément de liaison (1) est réalisé sous forme de pièce de coulage de précision, de pièce extrudée à froid ou de pièce en tôle.

7. Boîte de batterie (10) selon l'une des revendications précédentes, **caractérisée en ce que** l'élément de liaison (1) est constitué d'un métal pouvant être soudé ou d'un alliage pouvant être soudé, en particulier d'acier ou d'un alliage d'aluminium.

8. Boîte de batterie (10) selon l'une des revendications précédentes 1 à 7, **caractérisée en ce que** l'élément de liaison (1) est joint à la tôle de fond (9) par soudage laser dans la région de la section de jonction (2).

9. Boîte de batterie selon l'une des revendications précédentes 1 à 8, **caractérisée en ce que** l'épaisseur de la tôle de fond (9) et l'épaisseur de l'au moins une section de jonction (2) présentent un rapport de 1:1 à 1:3.

10. Boîte de batterie selon l'une des revendications précédentes 1 à 9, **caractérisée en ce que** la tôle de fond (9) présente une épaisseur comprise entre 0,5 mm et 1 mm.

11. Procédé de fabrication d'une boîte de batterie (10) pour un véhicule électrique (16) selon l'une des revendications précédentes 1 à 10, les éléments de liaison (1) étant agencés sur une tôle de fond (9) et soudés sur celle-ci, **caractérisé en ce qu'**entre l'agencement des éléments de liaison (1) sur la tôle de fond (9) et le soudage sur la tôle de fond (9), au moins une tôle de séparation (11) est agencée sur la tôle de fond (9), la tôle de séparation (11) et les éléments de liaison (1) étant ensuite soudés sur la tôle de fond successivement et de la même manière.
